# EUROPÄISCHE PATENTSCHRIFT

(11) **EP 3 822 059 B1**
(45) Veröffentlichungstag und Bekanntmachung des Hinweises auf die Patenterteilung: **14.12.2022**
(21) Anmeldenummer: 20201256.3
(22) Anmeldetag: 12.10.2020
(51) Int. Cl.: B29C 45/28, B29C 45/00, B29C 45/27

(54) **ANORDNUNG ZUM EINSPRITZEN VON KUNSTSTOFF IN EINE LANGGESTRECKTE SPRITZGUSSFORM EINER KUNSTSTOFFSPRITZMASCHINE**
ASSEMBLY FOR INJECTING PLASTIC INTO AN ELONGATED INJECTION MOULD OF A PLASTIC INJECTION MOULDING MACHINE
SYSTÈME D'INJECTION DE MATIÈRE PLASTIQUE DANS UN MOULE D'INJECTION ALLONGÉ D'UNE MACHINE D'INJECTION DE MATIÈRE PLASTIQUE

(30) Priorität: 15.11.2019 DE 102019130905
(43) Veröffentlichungstag der Anmeldung: 19.05.2021
(73) Patentinhaber: Meusburger Deutschland GmbH, 68519 Viernheim (DE)
(72) Erfinder: Hoffmann, Horst, 64658 Erlenbach (DE)
(74) Vertreter: Kesselhut, Wolf

(56) Entgegenhaltungen:
- CH-A5- 653 286
- CN-A- 106 363 884
- US-A- 4 420 452
- US-A1- 2014 232 044
- US-A1- 2017 312 962

## Beschreibung

Die Erfindung betrifft eine Anordnung zum Einspritzen von Kunststoff in eine lang gestreckte Spritzgussform einer Kunststoffspritzmaschine gemäß dem Oberbegriff von Anspruch 1.

Auf dem Gebiet der Kunststoffverarbeitung werden zur Herstellung von Kunststoffformteilen im Spritzgießverfahren Anordnungen eingesetzt, bei denen flüssiges Kunststoffschmelzgut aus einem Spritzzylinder unter hohem Druck von z.B. 2500 bar in einen elektrisch auf z.B. 260 °C bis 400°C erhitzten Schmelzgut-Verteiler eingebracht wird, über dessen Kanäle das flüssige Kunststoffmaterial dann zu einer Vielzahl von Nadelverschlussdüsen gelangt. Über die Nadelverschlussdüsen, die vorzugsweise hydraulisch über eine jeweilige Betätigungseinrichtung betätigt werden und sich vom Schmelzgut-Verteiler aus durch eine temperierte Formplatte hindurch bis an die Kavität heran erstrecken, wird das Schmelzgut über einen jeweiligen Angusskanal an den jeweiligen Angusspunkten durch eine Öffnung in der Spritzgussform hindurch in diese injiziert. Nach dem Erstarren des Schmelzguts in der gekühlten Spritzgussform wird diese geöffnet und im Anschluss daran das fertige Kunststoffformteil entnommen. Die Patentschrift US 2014/232044 A1 beschreibt eine Anordnung zum Einspritzen von Kunststoff in eine lang gestreckte Kavität einer Spritzgussform.

In Abhängigkeit von der Größe und Art der herzustellenden Kunststoffformteile ist es hierzu in der Regel erforderlich, eine Vielzahl von Nadelverschlussdüsen einzusetzen, um die Spritzgussform möglichst vollständig und gleichförmig mit dem Kunststoffschmelzgut zu befüllen. Dabei ist es für eine hohe Qualität der erzeugten Kunststoffformteile zwingend erforderlich, dass die über die Länge einer Spritzgussform hinweg an dieser angeordneten Angriffspunkte nacheinander und nicht gleichzeitig mit flüssigem Schmelzgut beaufschlagt werden, um eine sich gleichmäßig ausbreitende Schmelzgut-Front in der Spritzgussform zu erhalten. Hierzu ist es im Zusammenhang mit dem als Kaskaden-Spritzguss bezeichneten Verfahren bekannt, die Verschlussnadeln der Nadelverschlussdüsen zeitlich nacheinander zu öffnen, was insbesondere bei sehr großen und lang gestreckten Bauteilen eine Vielzahl von Nadelverschlussdüsen mit einer entsprechenden Anzahl von Betätigungseinheiten erfordert, die, beispielsweise bei hydraulischer Betätigung, jeweils durch eine entsprechende Steuerungseinrichtung angesteuert und über eine Druckfluidquelle mit einem Druckfluid versorgt werden müssen. Dementsprechend erhöhen sich bei großen Kunststoffformteilen die Kosten für die erforderlichen Bauteile und die Ansteuerung der Nadelverschlussdüsen.

Demgemäß ist es eine Aufgabe der vorliegenden Erfindung, eine Anordnung zum Einspritzen von Kunststoff in eine lang gestreckte Spritzgussform einer Kunststoffspritzmaschine zu schaffen, mit der sich bei geringem Vorrichtungs- und Steuerungsaufwand lang gestreckte Kunststoff-Formteile im Kaskaden-Spritzguss fertigen lassen.

Diese Aufgabe wird erfindungsgemäß durch eine Anordnung mit den Merkmalen von Anspruch 1 gelöst.

Weitere Merkmale der Erfindung sind in den Unteransprüchen beschrieben.

Gemäß der Erfindung umfasst eine Anordnung zum Einspritzen von Kunststoff in eine lang gestreckte Kavität einer Spritzgussform einen Schmelzgutverteiler mit wenigstens einem lang gestreckten Schmelzgutkanal. Das Schmelzgut wird dem Schmelzgutverteiler über eine Zufuhröffnung zugeführt. Weiterhin umfasst die Anordnung zwei oder mehr Schmelzgutzuleitungen, die mit dem lang gestreckten Schmelzgutkanal über entsprechende Austrittsöffnungen kommunizieren. Über diese Austrittsöffnungen, die im Abstand zueinander über die Länge des Schmelzgutkanals insbesondere umfänglich, d.h. in dessen Innenumfangsfläche, angeordnet sind, wird das in die Zufuhröffnung in bekannter Weise durch einen Spritzzylinder zugeführte flüssige Schmelzgut aus dem lang gestreckten Schmelzgutkanal zu einem jeweiligen Angusspunkt der Spritzgussform und von diesem aus weiter in die Kavität der Spritzgussform geleitet, in der es sich als Schmelzgutfront ausbreitet.

Die erfindungsgemäße Anordnung zeichnet sich dadurch aus, dass sich der zentrale Schmelzgutkanal geradlinig entlang der Spritzgussform erstreckt, und dass im Schmelzgutkanal wenigstens ein erster verschiebbarer Verschlusskörper angeordnet ist, der durch einen Antrieb in axialer Richtung innerhalb des Schmelzgutkanals verschoben werden kann. Hierbei hat der erste Verschlusskörper eine der Form der Innenfläche des Schmelzgutkanals angepasste Außenfläche, um den Schmelzgutkanal an der dem Verschlusskörper zugeordneten Austrittsöffnung dichtend zu verschließen. Der Verschlusskörper kann auf diese Weise aus einer Schließstellung in eine Freigabestellung verschoben werden, so dass das Schmelzgut an der entsprechenden Austrittsöffnung in die mit dieser kommunizierenden Schmelzgutzuleitung fließen kann.

Durch diese in Verbindung mit Heißkanalverteilern bisher nicht bekannte Verfahrensweise zum Verschließen und Öffnen der Austrittsöffnungen, durch die hindurch das flüssige Schmelzgut zeitlich nacheinander in die Kavität einer lang gestreckten Spritzgussform eingebracht wird, ergibt sich eine vorteilhafte Vereinfachung des Aufbaus der Anordnung, da keine aufwendig zu fertigenden und einzeln hydraulisch oder elektirsch anzusteuernden Nadelverschlussdüsen benötigt werden.

Obgleich bei einer besonders einfach ausgestalteten Ausführungsform der Erfindung lediglich ein einziger axial nicht durchgängiger Verschlusskörper im Bereich des mit einem Bypass versehenen Kanalabschnitts zum Einsatz gelangen kann, welcher der Zufuhröffnung für das flüssige Schmelzgut gegenüber liegt, ist es bei der bevorzugten Ausführungsform der Erfindung vorgesehen, dass der erste Verschlusskörper eine erste axiale Durchtrittsöffnung für das Schmelzgut besitzt, durch die hindurch das Schmelzgut zu wenigstens einer weiteren, stromabwärts des ersten Verschlusskörpers angeordneten umfänglichen Austrittsöffnung im Schmelzgutkanal gelangen kann. Hierdurch ergibt sich der Vorteil, dass ein parallel zum Schmelzgutkanal angeordneter Bypasskanal entfallen kann, was die Kosten für die Fertigung vereinfacht und die Kosten für die Anordnung verringert.

Nach einem weiteren der Erfindung zugrunde liegenden Gedanken kann es vorgesehen sein, dass im Schmelzgutkanal neben dem ersten Verschlusskörper ein weiterer zweiter verschiebbarer Verschlusskörper angeordnet ist, wobei die beiden Verschlusskörper über ein stangenförmiges Koppelelement mechanisch miteinander gekoppelt sind und innerhalb des Schmelzgutkanals durch einen Antrieb aus einer ersten axialen Stellung in eine zweite axiale Stellung verschoben werden können. Die Verschlusskörper weisen jeweils eine der Form der Innenfläche des Schmelzgutkanals angepasste Außenfläche zum dichtenden Verschließen der dem ersten Verschlusskörper zugeordneten ersten umfänglichen Austrittsöffnung und einer dem zweiten Verschlusskörper zugeordneten zweiten umfänglichen Austrittsöffnung im Schmelzgutkanal auf.

Dementsprechend kann das Schmelzgut an den verschiedenen Angusspunkten zu verschiedenen Zeitpunkten injiziert werden, ohne dass eine Vielzahl von Betätigungseinheiten benötigt wird, die jeweils durch eine entsprechende Steuerungseinrichtung angesteuert und über eine Druckfluidquelle mit einem Druckfluid (hydraulisch, pneumatisch) oder im Fall von Stellmotoren elektrisch versorgt werden müssen.

Gemäß der Erfindung ist es vorgesehen, dass der erste Verschlusskörper und der zweite Verschlusskörper durch das stangenförmige Koppelelement in einem solchen Abstand zueinander angeordnet sind und eine solche Länge besitzen, dass durch ein axiales Verschieben der Verschlusskörper die vorzugsweise umfänglichen Austrittsöffnungen entweder stromaufwärts oder stromabwärts nacheinander freigegeben werden. Auf diese Weise wird es ermöglicht, Spritzguss-Formteile im Kaskaden-Spritzguss herzustellen, da die einzelnen Schmelzgutzuleitungen, die durch die Verschlusskörper verschlossen werden, nacheinander durch ein Verschieben des Koppelelements gezielt geöffnet bzw. geschlossen werden können.

In einer bevorzugten Ausführungsform der erfindungsgemäßen Anordnung ist es vorgesehen, dass sowohl der erste Verschlusskörper als auch der zweite Verschlusskörper jeweils mindestens eine axiale Durchtrittsöffnung für das Schmelzgut besitzen. Durch diese hindurch kann das Schmelzgut zu einer stromabwärts angeordneten umfänglichen Austrittsöffnung im Schmelzgutkanal gelangen. Im Fall einer erfindungsgemäßen Anordnung mit weiteren Austrittsöffnungen, die durch eine entsprechende Anzahl von weiteren Verschlusskörpern, die über das Koppelelement gemeinsam verschiebbar miteinander verbunden sind, verschlossen oder freigegeben werden können, ist es vorgesehen, dass die weiteren Verschlusskörper ebenfalls eine Durchtrittsöffnung aufweisen, so dass das Schmelzgut bis zu der von der Zufuhröffnung strömungsmäßig am entferntesten angeordneten Austrittsöffnung gelangen kann.

In einer weiteren vorteilhaften Ausführungsform der erfindungsgemäßen Anordnung ist es vorgesehen, dass der erste und zweite Verschlusskörper und/oder alle weiteren Verschlusskörper unterschiedliche Längen aufweisen. Hierzu wird das Schmelzgut über die Zufuhröffnung in den Schmelzgutverteiler eingeleitet und durchfließt nacheinander den ersten und zweiten Verschlusskörper, wobei der zweite Verschlusskörper eine größere Länge als der erste Verschlusskörper besitzt. Die Länge des ersten Verschlusskörpers kann bei dieser Ausführungsform geringer gewählt werden als die Länge des zweiten Verschlusskörpers, da der erste Verschlusskörper bereits in der ersten von der vollständigen Schließstellung aller Austrittsöffnungen abweichenden Stellung des Koppelelements in eine Öffnungsstellung bewegt wird. Hierbei ist der Verfahrweg des Koppelelements aus der vollständigen Schließstellung aller Austrittsöffnungen, in diejenige Stellung, in der lediglich die erste Austrittsöffnung vom ersten Verschlusskörper freigegeben wird, am kürzesten und beträgt in vorteilhafter Weise etwas mehr als die Länge des ersten Verschlusskörpers, der wiederum etwas länger als der Durchmesser der ersten Austrittsöffnung ist.

Nach einem weiteren der Erfindung zugrunde liegenden Gedanken ist die von der Zufuhröffnung zur Zufuhr des flüssigen Schmelzguts am entferntesten liegende umfängliche Austrittsöffnung im Schmelzgutkanal bevorzugt einem bogenförmig geformten Kanalendabschnitt gegenüberliegend angeordnet, über welchen das flüssige Schmelzgut in Richtung zur umfänglichen Austrittsöffnung hin aus dem Schmelzgutkanal umgelenkt wird. Auf diese Weise kann vermieden werden, dass sich am Ende des Schmelzgutkanals ein Bereich ausbildet, in dem sich Schmelzgut ansammelt, das während mehrerer Spritzzyklen nicht weiter transportiert wird. Anders ausgedrückt wird das Schmelzgut bei dieser Ausführungsform der Erfindung in vorteilhafter Weise bei jedem Spritzzyklus kontinuierlich aus dem Schmelzgutkanal heraus durch die am entferntesten von der Zufuhröffnung liegende Austrittsöffnung in die Schmelzgutzuleitung gefördert. Die Zufuhr der Kunststoffschmelze in den Schmelzgutkanal kann in diesem Falle entweder über eine axiale Zufuhröffnung oder auch über eine bevorzugt im Bereich der Mitte des Schmelzgutkanals angeordnete laterale oder radiale Zufuhröffnung erfolgen.

In einer weiteren Ausgestaltung der erfindungsgemäßen Anordnung kann es vorgesehen sein, dass die von der Zufuhröffnung zur Zufuhr des flüssigen Schmelzguts am entferntesten liegende umfängliche Austrittsöffnung im Schmelzgutkanal zur Vermeidung von stehender Schmelze über einen bogenförmig verlaufenden Bypasskanal mit einem stromaufwärts der Austrittsöffnung gelegenen Kanalabschnitt kommuniziert. Über diesen Bypasskanal kann die flüssige Schmelze in vorteilhafter Weise in die am entferntesten liegende Austrittsöffnung eintreten, ohne dass sich ein Bereich mit "stehender Schmelze" ausbildet, die über mehrere Einspritzzyklen hinweg innerhalb des Schmelzgut Kanals an derselben Position verbleibt.

Nach einem weiteren der Erfindung zugrunde liegenden Gedanken kann es ferner vorgesehen sein, dass die Kraft zum Verschieben des oder der Verschlusskörper von dem der Zufuhröffnung für das flüssige Schmelzgut gegenüberliegenden Ende des Schmelzgutkanals aus über ein stangenförmiges Koppelelement, insbesondere eine Zug- oder Druckstange, und eine Umlenkeinrichtung auf die Verschlusskörper übertragen wird. Die Umlenkeinrichtung erlaubt es, dass der Antrieb zum Verschieben des stangenförmigen Koppelelements auf der der Austrittsseite des Koppelelements aus dem Schmelzgutverteiler gegenüberliegenden Seite angeordnet werden kann, wodurch sich der Vorteil ergibt, dass der Antrieb außerhalb eines in diesem Falle lang gestreckten Formkerns der Spritzgussform angeordnet werden kann, in welchem sich der beheizte Schmelzgutkanal befindet. Hierdurch wird zum einen die Konstruktion der Anordnung erheblich vereinfacht und zum anderen vermieden, dass der Antrieb während des Betriebs hohen Temperaturen ausgesetzt ist, wie dies bei einer Anordnung desselben an der Austrittsseite des Koppelelements des beheizten Schmelzgutkanals innerhalb des Formkerns der Fall wäre.

Die Erfindung wird nachfolgend mit Bezug auf die Zeichnungen anhand mehrerer bevorzugter Ausführungsformen beschrieben.

In den Zeichnungen zeigen:
- Fig. 1: eine schematische Schnittdarstellung einer beispielhaften bevorzugten Ausführungsform der erfindungsgemäßen Anordnung zum Spritzgießen eines tiefen Behälters,
- Fig. 2: eine vereinfachte schematische Schnittdarstellung einer weiteren bevorzugten Ausführungsform der erfindungsgemäßen Anordnung,
- Fig. 3: eine weitere, vereinfachte schematische Schnittdarstellung einer bevorzugten Ausführungsform der erfindungsgemäßen Anordnung mit Verschlusskörpern unterschiedlicher Länge,
- Fig. 4: eine weitere, vereinfachte schematische Schnittdarstellung einer bevorzugten Ausführungsform der erfindungsgemäßen Anordnung mit einer zwischen den Verschlusskörpern angeordneten Zufuhröffnung,
- Fig. 5: eine vereinfachte schematische Schnittdarstellung einer bevorzugten Ausführungsform der erfindungsgemäßen Anordnung zur Veranschaulichung der verschiedenen möglichen Stellpositionen der Verschlusskörper,
- Fig. 6: eine weitere Ausführungsform der Erfindung, bei der lediglich ein einziger axial durchgängiger Verschlusskörper im Bereich des bogenförmig geformten Kanalendabschnitts vorgesehen ist, welcher an dem der axialen Zufuhröffung gegenüber liegenden Ende des langgestreckten Schmelzgutkanals angeordnet ist, und
- Fig. 7: eine weitere alternative einfach zu fertigende Ausführungsform der Erfindung, bei der lediglich ein einziger axial nicht durchgängiger Verschlusskörper im Bereich des mit eine Bypass versehenen Kanalabschnitts vorgesehen ist, welcher der Zufuhröffnung für das flüssige Schmelzgut gegenüber liegt.

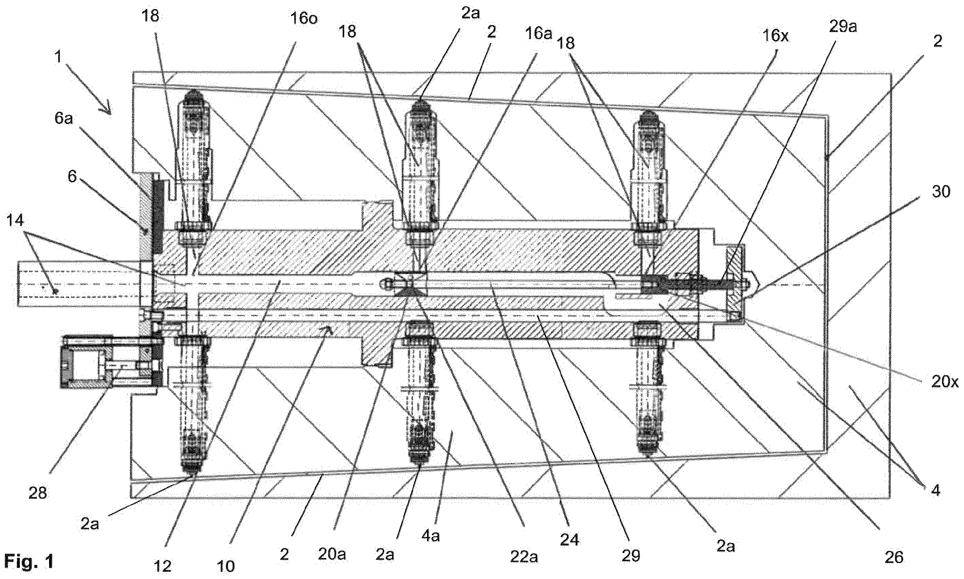

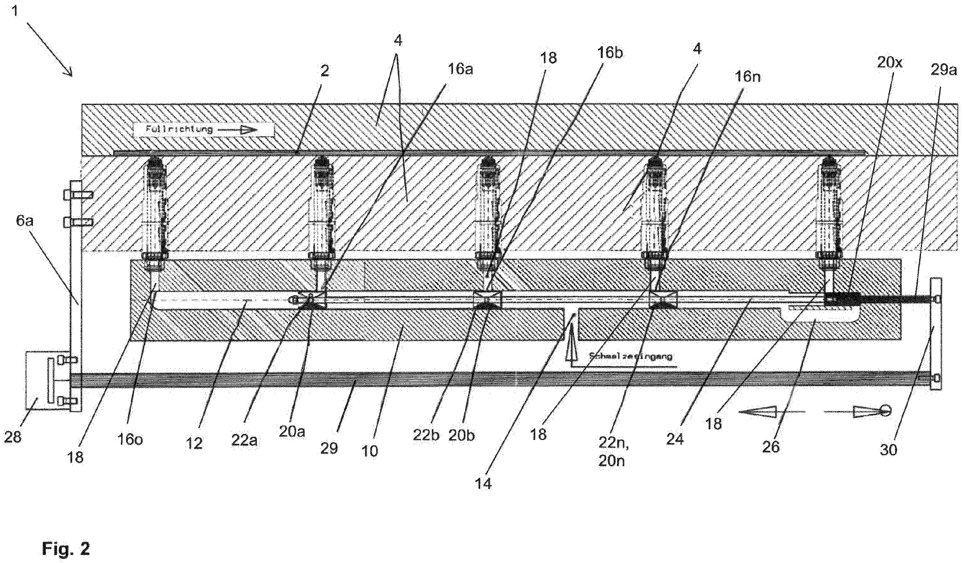

Wie in Fig. 1 und 2 gezeigt ist, umfasst die erfindungsgemäße Anordnung 1 zum Einspritzen von Kunststoff in eine lang gestreckte Kavität 2 einer Spritzgussform 4 einen in einen Formkern 4a der Spritzgussform 4 eingesetzten Schmelzgutverteiler 10 mit einem langgestreckten Schmelzgutkanal 12 sowie einem über eine Zug- oder Druckstange 29 betätigbaren stangenförmigen Koppelelement 24 und daran angeordnete Verschlusskörper 20a, 20b, auf die nachfolgend noch näher eingegangen wird. Wie in Figur 1 angedeutet ist, kann die Spritzgussform 4 beispielsweise eine Form zur Herstellung eines tiefen Behälters im Spritzgussverfahren sein, wie dies in der Zeichung schematisch angedeutet ist.

Im Schmelzgutverteiler 10 befindet sich flüssiges Schmelzgut, welches beispielsweise über einen nicht näher gezeigten Spritzzylinder, oder auch einen Extruder, über eine Zufuhröffnung 14 in den langgestreckten Schmelzgutkanal 12 des Schmelzgutverteilers 10 zugeführt wird.

Die erfindungsgemäße Anordnung 1 umfasst weiterhin Schmelzgutzuleitungen 18, die mit im Abstand zueinander angeordneten umfänglichen Austrittsöffnungen 16a, 16b und 16n bzw. 16x kommunizieren. Über die Schmelzgutzuleitungen 18 wird das flüssige Schmelzgut aus dem lang gestreckten Schmelzgutkanal 12 zu einem jeweiligen Angusspunkt 2a der Kavität 2 geleitet, welcher beispielsweise als insbesondere kreisförmige Öffnung ausgeführt ist, durch die hindurch das flüssige Schmelzgut mit hohem Druck in die Kavität 2 der Spritzgussform 4 injiziert wird.

Wie in Fig. 2 vereinfacht dargestellt ist, erstreckt sich der Schmelzgutkanal 12 in erfindungsgemäßer Weise geradlinig entlang der Spritzgussform 4, wobei die Länge des Schmelzgutkanals 12 und die Anzahl der angeordneten Schmelzgutzuleitungen 18 von dem zu fertigenden Formteil und dessen Abmessungen abhängen.

Im Schmelzgutkanal 12 ist ein erster Verschlusskörper 20a angeordnet, der mit Hilfe eines Antriebs 28 innerhalb des Schmelzgutkanals 12 aus einer ersten axialen Schließstellung in eine zweite axiale Freigabestellung und bevorzugt darüber hinaus noch in weitere axiale Freigabestellungen verschoben werden kann. Der Verschlusskörper 20a weist eine der Form der Innenfläche des Schmelzgutkanals 12 angepasste, vorzugsweise zylindermantelförmige Außenfläche auf, mittels welcher der erste Verschlusskörper 20a eine diesem zugeordnete erste umfängliche Austrittsöffnung 16a dichtend verschließen kann.

Wie sich der Darstellung der Figuren 2 bis 5 weiterhin im Detail entnehmen lässt, besitzt der erste Verschlusskörper 20a mindestens eine axiale Durchtrittsöffnung 22a für das Schmelzgut, durch die hindurch das Schmelzgut zu der zweiten stromabwärts des ersten Verschlusskörpers 20a angeordneten umfänglichen Austrittsöffnung 16b im Schmelzgutkanal 12 gelangen kann, wenn der erste Verschlusskörper 20a die erste umfängliche Austrittsöffnung 16a dichtend verschließt.

Weiterhin sind bei der in Fig. 2 dargestellten Ausführungsform in vorteilhafter Weise ein zweiter Verschlusskörper 20b und ein dritter Verschlusskörper 20n sowie ein vierter Verschlusskörper 20x im Schmelzgutkanal 12 angeordnet, die über das zuvor erwähnte stangenförmige Koppelelement 24 mit dem ersten Verschlusskörper 20a mechanisch gekoppelt sind und über die weitere Zug- oder Druckstange 29a gemeinsam durch den Antrieb 28 verschoben werden. Die Verschlusskörper 20a, 20b und 20n, bzw. 20x sind durch den Antrieb 28, der beispielsweise ein pneumatischer oder hydraulischer oder auch ein elektromagnetisch arbeitender Aktuator sein kann, innerhalb des Schmelzgutkanals 12 aus einer ersten axialen Stellung in eine zweite und bevorzugt auch weitere axiale Stellungen verschiebbar. Der erste Verschlusskörper 20a und der zweite Verschlusskörper 20b sind hierbei durch das stangenförmige Koppelelement 24 mechanisch miteinander gekoppelt, in einem solchen Abstand zueinander angeordnet und besitzen eine derart gewählte Länge, dass durch ein axiales Verschieben der Verschlusskörper 20a, 20b entweder die erste oder die zweite umfängliche Austrittsöffnung 16a, 16b oder aber alternativ keine der umfänglichen Austrittsöffnungen 16a, 16b verschlossen wird, je nach axialer Position des Koppelelements 24.

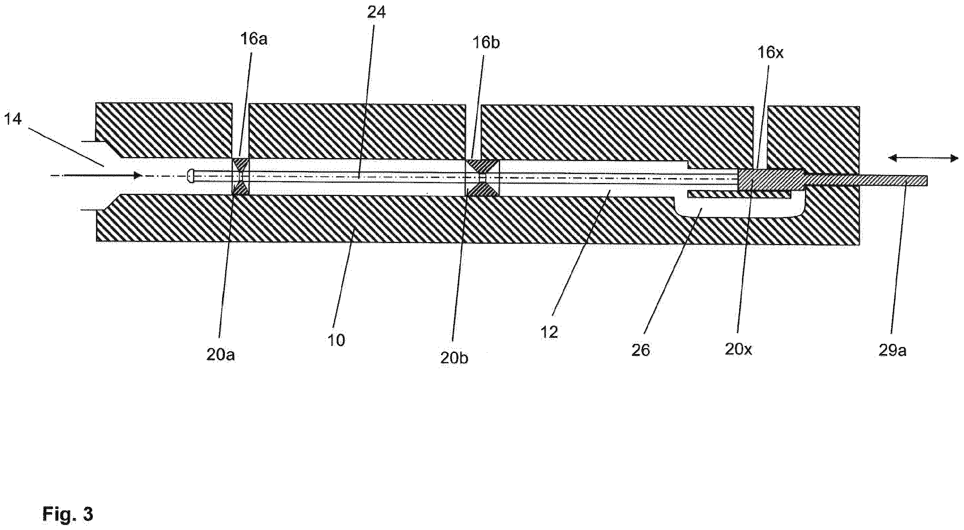

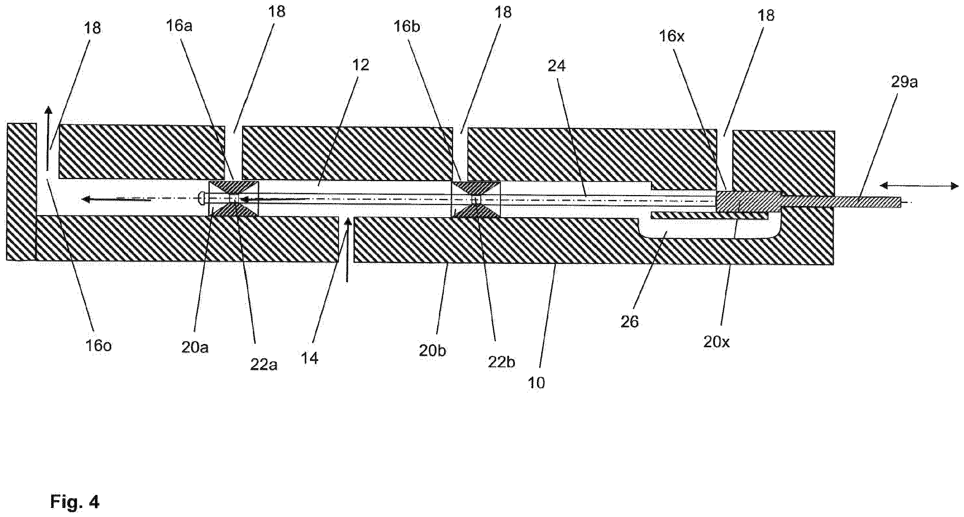

Bei dieser Ausführungsform kann das Schmelzgut durch eine zugehörige axiale Durchtrittsöffnung 22a, 22b durch den ersten Verschlusskörper 20a und den zweiten Verschlusskörper 20b sowie eine dritte oder allgemein weitere Öffnung 22n im Verschlusskörper 22n hindurch fließen und zu einer dritten oder allgemein weiteren umfänglichen Austrittsöffnung 16n im Schmelzgutkanal 12 gelangen, wenn der erste und zweite Verschlusskörper 20a, 20b die erste und die zweite umfängliche Austrittsöffnung 16a, 16b dichtend verschließen, wie dies in den Figuren 2 und 3 angedeutet ist. Außerdem ist in Fig. 2 eine weitere Austrittsöffnung 18 auf der der Umlenkeinrichtung 30 gegenüberliegenden Seite des Schmelzgutkanals 12 geformt, in welche das Schmelzgut unabhängig von der Stellung der Verschlusskörper 20a, 20b, 20n fließen kann. Das Schmelzgut wird bei der in Fig. 2 gezeigten Ausführungsform in gleicher Weise wie bei der Ausführungsform von Fig. 4 über eine laterale oder radiale zentrale Zufuhröffnung 14 zugeführt.

Fig. 3 zeigt eine vereinfachte schematische Schnittdarstellung einer weiteren Ausführungsform der erfindungsgemäßen Anordnung. Bei dieser Ausführungsform ist es vorgesehen, dass der erste und zweite Verschlusskörper 20a, 20b unterschiedliche Längen aufweisen. In bevorzugter Weise fließt das Schmelzgut zuerst durch den ersten Verschlusskörper 20a und dann durch den zweiten Verschlusskörper 20b, wobei der zweite Verschlusskörper 20b eine größere Länge besitzt als der erste Verschlusskörper 20a.

In einer weiteren alternativen Ausführungsform, die in Fig. 4 schematisiert dargestellt ist, ist der Zufuhrkanal 14 zwischen dem ersten und dem zweiten Verschlusskörper 20a, 20b angeordnet.

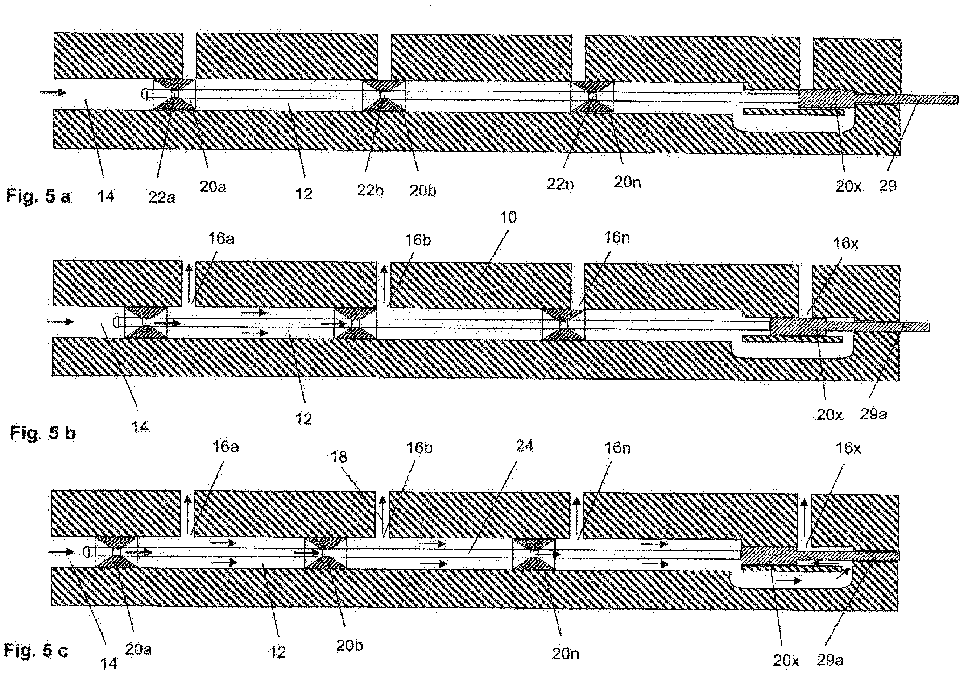

Fig. 5 zeigt verschiedene beispielhafte axiale Stellungen der Verschlusskörper 20 einer weiteren Ausführungsform der erfindungsgemäßen Anordnung 1. In Stellung a) sind alle Austrittsöffnungen 16 durch die Verschlusskörper 20 verschlossen. In Stellung b) sind die von der Zufuhröffnung 14 aus betrachtet stromabwärts gelegenen ersten beiden Austrittsöffnungen 16a, 16b geöffnet, wohingegen die stromabwärts folgenden Austrittsöffnungen 16c, 16n und 16x verschlossen sind. In Stellung c) sind alle Austrittsöffnungen 16 geöffnet und das Schmelzgut fließt an der von der Zufuhröffnung 14 am entferntesten gelegenen Austrittsöffnung durch den Kanalendabschnitt 26.

Nach einem weiteren der Erfindung zugrunde liegenden Gedanken kann es vorgesehen sein, dass, wie in den Figuren 1 bis 5 und 7 gezeigt, die von der Zufuhröffnung 14 zur Zufuhr des flüssigen Schmelzguts am entferntesten liegende umfängliche Austrittsöffnung 16x im Schmelzgutkanal 12 zur Vermeidung von stehender Schmelze über einen bogenförmig verlaufenden Bypasskanal 13 mit einem stromaufwärts der Austrittsöffnung 16x gelegenen Kanalabschnitt kommuniziert, über den die flüssige Schmelze in die am entferntesten liegende Austrittsöffnung 16x eingeleitet wird.

Weiterhin kann es vorgesehen sein, dass eine der umfänglichen Austrittsöffnungen 16o nicht durch einen Verschlusskörper verschließbar ist, sondern ständig in Strömungsverbindung mit dem Schmelzgutkanal 12 steht. Hierdurch ergibt sich der Vorteil, dass ein Verschlusskörper eingespart werden kann, wobei der der betreffenden Austrittsöffnung 16o zugeordnete Angusspunkt 2a beim Einspritzen des flüssigen Kunststoffmaterials in eine Kavität 2 stets zuerst mit dem Kunststoffmaterial beaufschlagt wird, und die der Austrittsöffnung 16o stromaufwärts gelegene benachbarte umfängliche Austrittsöffnung, im Falle von Figur 4 beispielsweise die Austrittsöffnung 16a, als nächstes freigegeben wird, während die stromaufwärts von dieser Austrittsöffnung 16a gelegenen übrigen umfänglichen Austrittsöffnungen durch die betreffenden Verschlusskörper 20b und 20x verschlossen sind..

Wie weiterhin der Darstellung der Figuren 1 und 2 entnommen werden kann, wird die Kraft zum Verschieben des oder der Verschlusskörper 20 bevorzugt von dem der Zufuhröffnung 14 für das flüssige Schmelzgut gegenüberliegenden Ende des Schmelzgutkanals 12 aus über eine Zug- oder Druckstange 29 und eine Umlenkeinrichtung 30 sowie die weitere Zug- oder Druckstange 29a auf das stangenförmige Koppelelement 24 übertragen, welches wiederum mechanisch mit den Verschlusskörpern 20a bis 20n, bzw. 20x gekoppelt ist, um diese in axialer Richtung innerhalb des langgestreckten Schmelzgutkanals 12 zu verschieben. Wie weiterhin in Fig.1 gezeigt ist, ist der Antrieb 28 zum Verschieben des stangenförmigen Koppelelements 24 bevorzugt auf der Seite der Zufuhröffnung 14 außerhalb des Formkerns 4a der Spritzgussform 4 angeordnet, in welchem sich der beheizte Schmelzgutkanal 12 befindet.

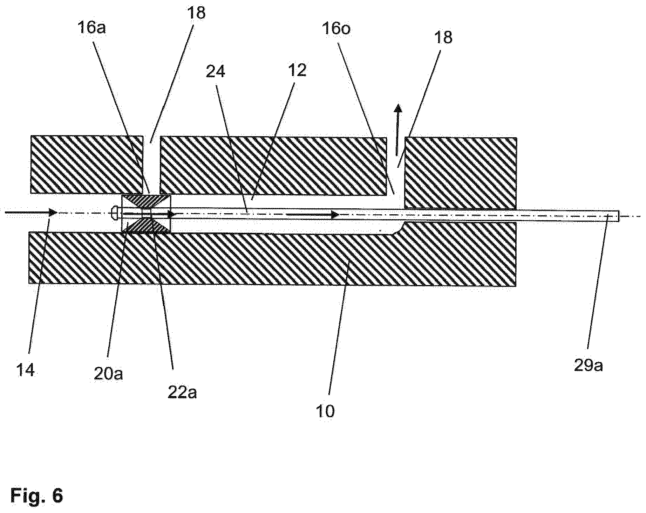

Wie weiterhin in Fig. 6 gezeigt ist, kann bei einer weitem, besonders einfachen und kostengünstig zu fertigenden Ausführungsform der Erfindung die von der Zufuhröffnung 14 zur Zufuhr des flüssigen Schmelzguts am entferntesten liegende umfängliche Austrittsöffnung 16x im Schmelzgutkanal 12 einem bogenförmig geformten Kanalendabschnitt 26 gegenüber liegen, über welchen das flüssige Schmelzgut in Richtung zur umfänglichen Austrittsöffnung 16x hin aus dem Schmelzgutkanal 12 umgelenkt wird.

Die Betätigung des bei dieser Ausführungsform mit einer axialen Durchtrittsöffnung 22a versehenen Verschlusskörpers 20a erfolgt dabei von der der Zufuhröffnung 14 gegenüberliegenden Seite aus über eine Zug- und Druckstange 29, die durch eine axiale Bohrung in der Seitenwand hindurch geführt ist.

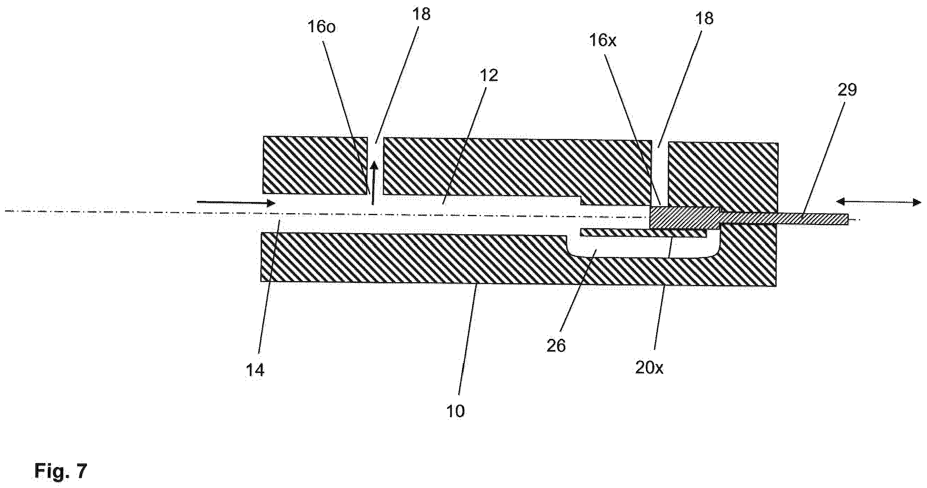

Gemäß einer weiteren, in Fig. 7 gezeigten weiteren Ausführungsform der Erfindung, bei der lediglich zwei Schmelzgutzuleitungen 18 über die Länge des Schmelzgutkanals 12 hinweg vorgesehen sind, erfolgt das Verschließen der Austrittsöffnung 16x an dem der Zufuhröffnung 14 gegenüberliegenden Ende durch einen Verschlusskörper 20x, der keine axiale Öffnung aufweist und im Bereich des bogenförmig geformten Kanalendabschnitts 26, bzw. des Bypasskanals 13 verschiebbar angeordnet ist. Das flüssige Schmelzgut umströmt den axial undurchlässigen Verschlusskörper 20x, wenn dieser aus der in Fig. 7 gezeigten Verschlussstellung in axialer Richtung in den Schmelzgutkanal 12 hinein bewegt wird, ohne die Abzweigöffnung für den Bypasskanal 13 zu veschließen.

### Liste der Bezugszeichen

- 1: erfindungsgemäße Anordnung
- 2: langgestreckte Kavität
- 2a: Angusspunkt der Kavität
- 4: Spritzgussform
- 4a: Formkern (Patritze)
- 6: Hubplatte
- 6a: Befestigungsplatte Zylinder
- 10: Schmelzgutverteiler
- 12: Schmelzgutkanal
- 13: Bypasskanal
- 14: Zufuhröffnung
- 16o: offene Austrittsöffnung
- 16a: erste umfängliche Austrittsöffnung
- 16b: zweite umfängliche Austrittsöffnung
- 16n: weitere umfängliche Austrittsöffnung
- 16x: umfängliche Austrittsöffnung im Bereich des Bypasses
- 18: Schmelzgutzuleitung
- 20a: erster Verschlusskörper
- 20b: zweiter Verschlusskörper
- 20n: dritter Verschlusskörper
- 20x: geschlossener Verschlusskörper im Bereich des Bypasses
- 22a: erste axiale Durchtrittsöffnung
- 22b: zweite axiale Durchtrittsöffnung
- 22n: dritte axiale Durchtrittsöffnung
- 24: stangenförmiges Koppelelement
- 26: bogenförmig geformter Kanalendabschnitt
- 28: Antrieb
- 29: Zug- oder Druckstange
- 29a: weitere Zug- oder Druckstange
- 30: Umlenkeinrichtung

## Patentansprüche

1. Anordnung (1) zum Einspritzen von Kunststoff in eine lang gestreckte Kavität (2) einer Spritzgussform (4) umfassend einen Schmelzgutverteiler (10) mit mindestens einem lang gestreckten Schmelzgutkanal (12), dem flüssiges Schmelzgut über eine Zufuhröffnung (14) zuführbar ist, sowie wenigstens zwei mit dem Schmelzgutkanal (12) über im Abstand zueinander angeordnete umfängliche Austrittsöffnungen (16) kommunizierende Schmelzgutzuleitungen (18), über welche das flüssige Schmelzgut aus dem lang gestreckten Schmelzgutkanal (12) zu einem jeweiligen Angusspunkt (2a) der lang gestreckten Kavität (2) zuführbar und in die Spritzgussform (4) injizierbar ist,
**dadurch gekennzeichnet,**
**dass** sich der Schmelzgutkanal (12) geradlinig entlang der Spritzgussform (4) erstreckt, und dass im Schmelzgutkanal (12) wenigstens ein erster durch einen Antrieb (28) innerhalb des Schmelzgutkanals (12) aus einer ersten axialen Schließstellung in eine zweite axiale Freigabestellung verschiebbarer Verschlusskörper (20) angeordnet ist, der eine der Form der Innenfläche des Schmelzgutkanals (12) angepasste Außenfläche zum dichtenden Verschließen einer dem ersten Verschlusskörper (20) zugeordneten ersten umfänglichen Austrittsöffnung (16) aufweist.

2. Anordnung nach Anspruch 1,
**dadurch gekennzeichnet,**
**dass** der erste Verschlusskörper (20a) mindestens eine axiale Durchtrittsöffnung (22a) für das Schmelzgut besitzt, durch die hindurch das Schmelzgut zu weiteren stromabwärts des ersten Verschlusskörpers (20a) angeordneten umfänglichen Austrittsöffnungen (16n) im Schmelzgutkanal (12) gelangen kann, wenn der erste Verschlusskörper (20a) die erste umfängliche Austrittsöffnung (16a) dichtend verschließt.

3. Anordnung nach Anspruch 1 oder 2,
**dadurch gekennzeichnet,**
**dass** im Schmelzgutkanal (12) ein erster und ein zweiter über ein stangenförmiges Koppelelement (24) mechanisch miteinander gekoppelter und durch einen Antrieb (28) innerhalb des Schmelzgutkanals (12) aus einer ersten axialen Stellung in eine zweite axiale Stellung verschiebbarer Verschlusskörper (20a, 20b) angeordnet sind, die jeweils eine der Form der Innenfläche des Schmelzgutkanals (12) angepasste Außenfläche zum dichtenden Verschließen einer dem ersten Verschlusskörper (20a) zugeordneten ersten umfänglichen Austrittsöffnung (16a) und einer dem zweiten Verschlusskörper (20b) zugeordneten zweiten umfänglichen Austrittsöffnung (16b) im Schmelzgutkanal (12) aufweisen.

4. Anordnung nach Anspruch 3,
**dadurch gekennzeichnet,**
**dass** der erste Verschlusskörper (20a) und der zweite Verschlusskörper (20b) durch das stangenförmige Koppelelement (24) in einem solchen Abstand zueinander angeordnet sind und eine solche Länge besitzen, dass durch ein axiales Verschieben der Verschlusskörper (20a, 20b) entweder die erste oder die zweite umfängliche Austrittsöffnung (16a, 16b) oder keine der umfänglichen Austrittsöffnungen (16a, 16b) verschlossen wird.

5. Anordnung nach Anspruch 3 oder 4,
**dadurch gekennzeichnet,**
**dass** der erste Verschlusskörper (20a) und der zweite Verschlusskörper (20b) jeweils mindestens eine axiale Durchtrittsöffnung (22a, 22b) für das Schmelzgut besitzen, durch die hindurch das Schmelzgut zu einer stromabwärts der zweiten umfänglichen Austrittsöffnung (16b) des zweiten Verschlusskörpers (20b) angeordneten dritten umfänglichen Austrittsöffnung (16c) im Schmelzgutkanal (12) gelangen kann, wenn der erste und zweite Verschlusskörper (20a, 20b) die erste und die zweite umfängliche Austrittsöffnung (16a, 16b) dichtend verschließen.

6. Anordnung nach einem der Ansprüche 3 bis 5,
**dadurch gekennzeichnet,**
**dass** der erste und zweite Verschlusskörper (20a, 20b) und/oder mindestens ein weiterer Verschlusskörper vorgesehen ist, die (20n, 20x) unterschiedliche Längen aufweisen.

7. Anordnung nach einem der Ansprüche 5 oder 6,
**dadurch gekennzeichnet,**
**dass** das der Zufuhröffnung (14) zugeführte Schmelzgut den ersten und zweiten Verschlusskörper (20a, 20b) und/oder einen weiteren Verschlusskörper (20n) nacheinander durchfließt und dass der zweite Verschlusskörper (20b) eine größere Länge als der erste Verschlusskörper (20a) besitzt.

8. Anordnung nach einem der vorhergehenden Ansprüche,
**dadurch gekennzeichnet,**
**dass** die von der Zufuhröffnung (14) zur Zufuhr des flüssigen Schmelzguts am entferntesten liegende umfängliche Austrittsöffnung (16x) im Schmelzgutkanal (12) einem bogenförmig geformten Kanalendabschnitt (26) gegenüber liegt, über welchen das flüssige Schmelzgut in Richtung zur umfänglichen Austrittsöffnung (16x) hin aus dem Schmelzgutkanal (12) umgelenkt wird.

9. Anordnung nach einem der Ansprüche 1 bis 7,
**dadurch gekennzeichnet,**
**dass** die von der Zufuhröffnung (14) zur Zufuhr des flüssigen Schmelzguts am entferntesten liegende umfängliche Austrittsöffnung (16x) im Schmelzgutkanal (12) zur Vermeidung von stehender Schmelze über einen bogenförmig verlaufenden Bypasskanal (13) mit einem stromaufwärts der Austrittsöffnung (16x) gelegenen Kanalabschnitt kommuniziert, über den die flüssige Schmelze in die am entferntesten liegende Austrittsöffnung (16x) eintritt.

10. Anordnung nach einem der Ansprüche 2 bis 9,
**dadurch gekennzeichnet,**
**dass** die Kraft zum Verschieben des oder der Verschlusskörper (20) von dem der Zufuhröffnung (14) für das flüssige Schmelzgut gegenüberliegenden Ende des Schmelzgutkanals (12) aus über eine Zug- oder Druckstange (29, 29a) und eine Umlenkeinrichtung (30) auf das stangenförmige Koppelelement (24) und die Verschlusskörper (20) übertragen wird.

11. Anordnung nach Anspruch 10,
**dadurch gekennzeichnet,**
**dass** der Antrieb (28) zum Verschieben des stangenförmigen Koppelelements (24) auf der Seite der Zufuhröffnung (14) angeordnet ist.

## Claims

1. Assembly (1) for injecting plastic into an elongate cavity (2) of an injection mould (4) comprising a molten-material distributor (10) with at least one elongate molten-material channel (12), to which liquid molten material can be fed through a feed opening (14), and at least two molten-material feed lines (18), which communicate with the molten-material channel (12) via spaced-apart circumferential outlet openings (16) and through which the liquid molten material from the elongate molten-material channel (12) can be fed to a respective gate point (2a) of the elongate cavity (2) and injected into the injection mould (4),
**characterized**
**in that** the molten-material channel (12) extends in a straight line along the injection mould (4), and in that, in the molten-material channel (12), there is arranged at least one first closing body (20) that can be displaced within the molten-material channel (12) from a first axial closing position to a second axial opening-up position by a drive (28) and that has an outer surface which is matched to the shape of the inner surface of the molten-material channel (12) and is intended for sealingly closing a first circumferential outlet opening (16) that is assigned to the first closing body (20).

2. Assembly according to Claim 1,
**characterized**
**in that** the first closing body (20a) has at least one axial passage opening (22a) for the molten material, through which the molten material can pass to further outlet openings (16n) in the molten-material channel (12) which are downstream of the first closing body (20a) when the first closing body (20a) sealingly closes the first circumferential outlet opening (16a).

3. Assembly according to Claim 1 or 2,
**characterized**
**in that**, in the molten-material channel (12), there are arranged a first and a second closing body (20a, 20b), which are mechanically coupled to one another via a rod-shaped coupling element (24), can be displaced within the molten-material channel (12) from a first axial position to a second axial position by a drive (28), and each of which has an outer surface that is matched to the shape of the inner surface of the molten-material channel (12) and is intended for sealingly closing a first circumferential outlet opening (16a), which is assigned to the first closing body (20a), and a second circumferential outlet opening (16b), which is assigned to the second closing body (20b) in the channel (12).

4. Assembly according to Claim 3,
**characterized**
**in that** the first closing body (20a) and the second closing body (20b) are spaced apart from one another by the rod-shaped coupling element (24) such that, and have such a length that, by axially displacing the closing bodies (20a, 20b), either the first or the second circumferential outlet opening (16a, 16b), or none of the circumferential outlet openings (16a, 16b), is closed.

5. Assembly according to Claim 3 or 4,
**characterized**
**in that** the first closing body (20a) and the second closing body (20b) each have at least one axial passage opening (22a, 22b) for the molten material, through which the molten material can pass to a third circumferential outlet opening (16c) and is arranged downstream of the second circumferential outlet opening (16b), of the second closing body (20b), in the molten-material channel (12) when the first and second closing bodies (20a, 20b) sealingly close the first and the second circumferential outlet opening (16a, 16b).

6. Assembly according to one of Claims 3 to 5,
**characterized**
**in that** the first and second closing bodies (20a, 20b) have different lengths and/or at least one further closing body which (20n, 20x) have different lengths is provided.

7. Assembly according to either of Claims 5 and 6,
**characterized**
**in that** the molten material fed to the feed opening (14) flows through the first and second closing bodies (20a, 20b) and/or a further closing body (20n) in succession, and in that the second closing body (20b) is longer than the first closing body (20a).

8. Assembly according to one of the preceding claims,
**characterized**
**in that** the circumferential outlet opening (16x) in the molten-material channel (12) that is furthest away from the feed opening (14) for feeding the liquid molten material faces an arcuately shaped channel end portion (26), via which the liquid molten material is deflected from the molten-material channel (12) in the direction of the circumferential outlet opening (16x).

9. Assembly according to one of Claims 1 to 7,
**characterized**
**in that** the circumferential outlet opening (16x) in the molten-material channel (12) that is furthest away from the feed opening (14) for feeding the liquid molten material communicates with a channel portion, which is upstream of the outlet opening (16x) and via which the liquid melt enters the furthest-away outlet opening (16x), via an arcuate bypass channel (13) for the purpose of avoiding melt being at a standstill.

10. Assembly according to one of Claims 2 to 9,
**characterized**
**in that** the force for displacing the closure body/bodies (20) is transferred from the end of the molten-material channel (12) situated opposite the feed opening (14) for the liquid molten material to the rod-shaped coupling element (24) and the closing body (20) via a pull or push rod (29, 29a) and a deflecting device (30).

11. Assembly according to Claim 10,
**characterized**
**in that** the drive (28) for displacing the rod-shaped coupling element (24) is arranged on the side of the feed opening (14).

## Revendications

1. Agencement (1) pour l'injection de matière plastique dans une cavité allongée (2) d'un moule de moulage par injection (4), comprenant un distributeur de matière fondue (10) avec au moins un canal de matière fondue allongé (12), auquel de la matière fondue fluide peut être amenée par l'intermédiaire d'une ouverture d'amenée (14), ainsi qu'au moins deux conduites d'alimentation en matière fondue (18) communiquant avec le canal de matière fondue (12) par l'intermédiaire d'ouvertures de sortie périphériques (16) agencées à distance les unes des autres, par l'intermédiaire desquelles la matière fondue fluide peut être amenée du canal de matière fondue allongé (12) à un point d'entrée (2a) respectif de la cavité allongée (2) et injectée dans le moule de moulage par injection (4),
**caractérisé en ce que**
le canal de matière fondue (12) s'étend en ligne droite le long du moule de moulage par injection (4), et **en ce que** dans le canal de matière fondue (12) est agencé au moins un premier corps de fermeture (20) pouvant être déplacé par un entraînement (28) à l'intérieur du canal de matière fondue (12) d'une première position de fermeture axiale dans une deuxième position de libération axiale, qui présente une surface extérieure adaptée à la forme de la surface intérieure du canal de matière fondue (12) pour la fermeture étanche d'une première ouverture de sortie périphérique (16) associée au premier corps de fermeture (20).

2. Agencement selon la revendication 1, **caractérisé en ce que** le premier corps de fermeture (20a) possède au moins une ouverture de passage axiale (22a) pour la matière fondue, à travers laquelle la matière fondue peut atteindre d'autres ouvertures de sortie périphériques (16n) agencées en aval du premier corps de fermeture (20a) dans le canal de matière fondue (12) lorsque le premier corps de fermeture (20a) ferme de manière étanche la première ouverture de sortie périphérique (16a).

3. Agencement selon la revendication 1 ou 2, **caractérisé en ce qu'**un premier et un deuxième corps de fermeture (20a,20b) couplés mécaniquement l'un à l'autre par l'intermédiaire d'un élément de couplage en forme de tige (24) et pouvant être déplacés par un entraînement (28) à l'intérieur du canal de matière fondue (12) d'une première position axiale dans une deuxième position axiale sont agencés dans le canal de matière fondue (12), qui présentent chacun une surface extérieure adaptée à la forme de la surface intérieure du canal de matière fondue (12) pour la fermeture étanche d'une première ouverture de sortie périphérique (16a) associée au premier corps de fermeture (20a) et d'une deuxième ouverture de sortie périphérique (16b) associée au deuxième corps de fermeture (20b) dans le canal de matière fondue (12).

4. Agencement selon la revendication 3, **caractérisé en ce que** le premier corps de fermeture (20a) et le deuxième corps de fermeture (20b) sont agencés à une distance telle l'un de l'autre par l'élément de couplage en forme de tige (24) et possèdent une longueur telle qu'un déplacement axial des corps de fermeture (20a, 20b) ferme soit la première, soit la deuxième ouverture de sortie périphérique (16a, 16b), soit aucune des ouvertures de sortie périphériques (16a, 16b).

5. Agencement selon la revendication 3 ou 4, **caractérisé en ce que** le premier corps de fermeture (20a) et le deuxième corps de fermeture (20b) possèdent chacun au moins une ouverture de passage axiale (22a, 22b) pour la matière fondue, à travers laquelle la matière fondue peut atteindre une troisième ouverture de sortie périphérique (16c) agencée en aval de la deuxième ouverture de sortie périphérique (16b) du deuxième corps de fermeture (20b) dans le canal de matière fondue (12) lorsque le premier et le deuxième corps de fermeture (20a, 20b) ferment de manière étanche la première et la deuxième ouverture de sortie périphérique (16a, 16b).

6. Agencement selon l'une quelconque des revendications 3 à 5, **caractérisé en ce que** le premier et le deuxième corps de fermeture (20a, 20b) et/ou au moins un autre corps de fermeture sont prévus, qui (20n, 20x) présentent des longueurs différentes.

7. Agencement selon l'une quelconque des revendications 5 ou 6, **caractérisé en ce que** la matière fondue amenée à l'ouverture d'amenée (14) traverse successivement le premier et le deuxième corps de fermeture (20a, 20b) et/ou un autre corps de fermeture (20n) et **en ce que** le deuxième corps de fermeture (20b) possède une longueur supérieure à celle du premier corps de fermeture (20a).

8. Agencement selon l'une quelconque des revendications précédentes, **caractérisé en ce que** l'ouverture de sortie périphérique (16x) dans le canal de matière fondue (12) la plus éloignée de l'ouverture d'amenée (14) pour l'amenée de la matière fondue fluide se situe en face d'une section d'extrémité de canal (26) en forme d'arc, par l'intermédiaire de laquelle la matière fondue fluide est redirigée en direction de l'ouverture de sortie périphérique (16x) à partir du canal de matière fondue (12).

9. Agencement selon l'une quelconque des revendications 1 à 7, **caractérisé en ce que** l'ouverture de sortie périphérique (16x) dans le canal de matière fondue (12) la plus éloignée de l'ouverture d'amenée (14) pour l'amenée de la matière fondue fluide communique par l'intermédiaire d'un canal de dérivation (13) s'étendant en forme d'arc avec une section de canal placée en amont de l'ouverture de sortie (16x) afin d'éviter une matière fondue stagnante, par l'intermédiaire de laquelle la matière fondue fluide pénètre dans l'ouverture de sortie (16x) la plus éloignée.

10. Agencement selon l'une quelconque des revendications 2 à 9, **caractérisé en ce que** la force pour le déplacement du ou des corps de fermeture (20) est transmise depuis l'extrémité du canal de matière fondue (12) opposée à l'ouverture d'amenée (14) pour la matière fondue fluide par l'intermédiaire d'une tige de traction ou de poussée (29, 29a) et d'un dispositif de renvoi (30) vers l'élément de couplage en forme de tige (24) et les corps de fermeture (20).

11. Agencement selon la revendication 10, **caractérisé en ce que** l'entraînement (28) pour le déplacement de l'élément de couplage en forme de tige (24) est agencé du côté de l'ouverture d'amenée (14).
